# EUROPÄISCHE PATENTSCHRIFT

(11) **EP 2 678 650 B1**
(45) Veröffentlichungstag und Bekanntmachung des Hinweises auf die Patenterteilung: **23.09.2015**
(21) Anmeldenummer: 12706500.1
(22) Anmeldetag: 10.02.2012
(51) Int. Cl.: G01K 3/04

(54) **STATUSINDIKATOR FÜR TEMPERATUREMPFINDLICHE GÜTER**
STATUS INDICATOR FOR TEMPERATURE-SENSITIVE GOODS
INDICATEUR D'ÉTAT POUR DES PRODUITS SENSIBLES À LA TEMPÉRATURE

(30) Priorität: 25.02.2011 DE 102011004799
(43) Veröffentlichungstag der Anmeldung: 01.01.2014
(73) Patentinhaber: VARTA Microbattery GmbH, 73479 Ellwangen (DE)
(72) Erfinder: MAIER, Michael, 73466 Lauchheim/Hülen (DE); RABINEN, Martin, 73479 Ellwangen (DE)
(74) Vertreter: Patentanwälte Ruff, Wilhelm, Beier, Dauster & Partner
(86) Internationale Anmeldenummer: PCT/EP2012/052252
(87) Internationale Veröffentlichungsnummer: WO 2012/113656

(56) Entgegenhaltungen:
- WO-A1-00/66989
- DE-A1- 3 643 352
- US-A- 3 170 860

## Beschreibung

Die vorliegende Erfindung betrifft ein Verfahren zur Überwachung der Temperatur von temperaturempfindlichen Gütern sowie eine dazu geeignete Vorrichtung.

Um temperaturempfindliche Güter, beispielsweise verderbliche Lebensmittel, über einen längeren Zeitraum zu konservieren oder über größere Strecken zu transportieren,werden diese zumeist gekühlt oder tiefgefroren. Unterhalb von -16 °C bis -18 °C kommt der natürliche Verfall von Lebensmitteln nahezu vollständig zum Erliegen. Gefriergut kann bei diesen Temperaturen gegebenenfalls über mehrere Monate gelagert werden. Allerdings sollte bei einer längeren Lagerung oder einem längeren Transport die Kühlkette niemals unterbrochen werden. Den Verfall fördernde Mikroorganismen werden beim Abkühlen oder Einfrieren nämlich nicht abgetötet. Ihr Stoffwechsel wird beim Auftauen sofort wieder aktiviert. Kältekonservierte und anschließend aufgetaute Lebensmittel sollten möglichst nicht noch ein zweites Mal tiefgefroren und aufgetaut sondern vielmehr direkt verzehrt werden.

Insbesondere von Seiten der Verbraucher und von Seiten der Einzelhändler besteht ein großes Interesse daran, schnell und sicher nachvollziehen zu können, ob gekühlte oder tiefgefrorene Lebensmittel sachgerecht gelagert wurden oder ob es, zum Beispiel beim Transport, zu Unterbrechungen der Kühlkette kam.

Aus der DE 27 36 470 A1 ist eine Vorrichtung zur dauerhaften Feststellung einer vorübergehenden Wiedererwärmung eines tiefgekühlten Produkts bekannt. Die beschriebene Vorrichtung weist eine Kapsel auf, die an der Verpackung des Lebensmittels angeordnet und mit einer Flüssigkeit befüllt ist. Die Kapsel besteht aus zerbrechlichem Material. Wird das Produkt tiefgefroren, so dehnt sich die in der Kapsel erstarrende Flüssigkeit aus, wobei die Kapsel aufgrund der Volumenvergrößerung platzt. Solange die Temperatur nicht ansteigt, läuft die gefrorene Flüssigkeit nicht aus. Dies geschieht erst beim Auftauen. Dabei wird gegebenenfalls die auslaufende Flüssigkeit von einer die Kapsel umgebenden Substanz absorbiert, die dabei dauerhaft ihre Farbe ändert. Somit ist nachvollziehbar, ob die Kältekette unterbrochen wurde bzw. ob es sich um ein frisches oder vormals gefrorenes Produkt handelt.

Die DE 38 01 541 A1 beschreibt einen Indikator zur Überwachung der Temperatur von gekühlten Produkten. Der Indikator ist batteriebetrieben und an einer thermisch isolierenden Verpackung angeordnet. Der Indikator ist in der Lage, die Temperatur im Inneren der Verpackung elektronisch zu erfassen. Auf einem LCD-Display wird die aktuelle Temperatur, die erreichte Höchsttemperatur und gegebenenfalls die Gesamtdauer der Überschreitung einer unteren Grenztemperatur angezeigt.

Die WO 00/66989 A1 beschreibt eine Vorrichtung zur Überwachung der Temperatur von temperaturempfindlichen Gütern.

Der vorliegenden Erfindung lag die Aufgabe zugrunde, eine den beschriebenen Verfahren vergleichbare jedoch universeller einsetzbare und zugleich möglichst kostengünstige Vorgehensweise zu entwickeln. Diese Aufgabe wird gelöst durch die Vorrichtung mit den Merkmalen des Anspruchs 1 sowie das Verfahren mit den Merkmalen des Anspruchs 7. Bevorzugte Ausführungsformen der erfindungsgemäßen Vorrichtung sind in den abhängigen Ansprüchen 2 bis 6 angegeben. Der Wortlaut sämtlicher Ansprüche wird hiermit durch Bezugnahme zum Inhalt dieser Beschreibung gemacht.

Eine erfindungsgemäße Vorrichtung umfasst eine Gaserzeugungszelle, einen NTC-Widerstand und ein Anzeigemittel.

Aufgabengemäß dient die erfindungsgemäße Vorrichtung zur Überwachung der Temperatur von temperaturempfindlichen Gütern, insbesondere von Gütern, die sich in einem entsprechenden Transportbehältnis befinden. Mit der erfindungsgemäßen Vorrichtung lassen sich grundsätzlich die Temperaturen sämtlicher Artikel überwachen, die bei Überschreitung definierter Temperaturen Schaden nehmen könnten. In Frage kommen beispielsweise pharmazeutische und biotechnologische Produkte, medizinische Proben wie zum Beispiel Gewebe- oder Blutproben sowie empfindliche elektronische Bauteile. Besonders bevorzugt handelt es sich bei den zu transportierenden Gütern jedoch um Nahrungsmittel, insbesondere um gekühlte oder tiefgefrorene Nahrungsmittel.

Für die zu überwachenden Güter lässt sich in der Regel eine Grenztemperatur angeben, bei deren Überschreiten die Güter Schaden nehmen können. Es gilt insbesondere, derartige Temperaturschwankungen mittels der erfindungsgemäßen Vorrichtung zu registrieren.

Geeignete Transportbehältnisse für derartige Güter sind meist thermisch isoliert. Die erfindungsgemäße Vorrichtung eignet sich zur Überwachung der Temperatur in Transportbehältnissen jeglicher Art und Größe, beispielsweise in Transportboxen oder in Transportcontainern.

Bei einer Gaserzeugungszelle handelt es sich um eine Zelle, die bei Durchfluss eines Stromes ein Gas freisetzt. Die Menge des freigesetzten Gases ist dabei in der Regel gemäß dem Faradayschen Gesetz proportional zu der Menge des Stroms, der die Gaserzeugungszelle durchfließt. Ein Beispiel für eine im Rahmen der vorliegenden Erfindung verwendbare Gasentwicklungszelle ist eine Wasserstoffentwicklungszelle. Eine Wasserstoffentwicklungszelle weist in aller Regel ein metall-, insbesondere ein zinkhaltiges Material als oxidierbare Anode, eine Wasserstoffkathode und einen wässrigen, vorzugsweise alkalischen Elektrolyten auf. Wasserstoff ist in einer solchen Wasserstoffentwicklungszelle chemisch in Form von Wasser als Hauptbestandteil des Elektrolyten gespeichert. Derartige Zellen sind beispielsweise in der DE 36 43 352 A1 und in der US 5,242,565 beschrieben. Der Inhalt dieser beiden Dokumente wird hiermit durch Bezugnahme vollumfänglich zum Inhalt der vorliegenden Beschreibung gemacht.

Bei einem NTC-Widerstand (Englisch: negative temperature coefficient thermistor) handelt es sich um einen speziellen elektrischen Widerstand, der bei hohen Temperaturen Strom besser leitet als bei tiefen Temperaturen. NTC-Widerstände haben somit einen negativen Temperaturkoeffizienten, wovon sich auch ihr Name ableitet. Alternativ werden sie auch als "Heißleiter" bezeichnet. Heißleitendes Verhalten zeigen zum Beispiel reine Halbleitermaterialien, Verbindungshalbleiter und verschiedene Legierungen mit negativem Temperaturkoeffizienten. Elektronische Bauteile, bei denen speziell das temperaturabhängige Leitverhalten ausgenutzt wird, sind üblicherweise mit Bindemittel versetzte gepresste und gesinterte Metalloxide. Dazu gehören Oxide von Mangan, Nickel, Cobalt, Eisen, Kupfer oder Titan. Der übliche Einsatzbereich von NTC-Widerständen liegt im Bereich zwischen minus 80 °C und plus 250 °C. Entsprechend dient die erfindungsgemäße Vorrichtung insbesondere auch zur Überwachung von Temperaturen in diesem Bereich.

Das Anzeigemittel dient dazu, während der Überwachung gegebenfalls auftretende Temperaturschwankungen zu visualisieren, zumindest sofern die erwähnte Grenztemperatur überschritten wurde.

Erfindungsgemäß sind die Gaserzeugungszelle, der NTC-Widerstand und das Anzeigemittel derart miteinander gekoppelt, dass bei Stromfluss durch den NTC-Widerstand von der Gaserzeugungszelle eine der durch den NTC-Widerstand fließenden Strommenge äquivalente Menge Gas erzeugt wird und das Anzeigemittel in Abhängigkeit der erzeugten Gasmenge zur Visualisierung seinen Zustand und/oder seine Position verändert.

Der NTC-Widerstand wird idealerweise so gewählt, dass er erst oberhalb der erwähnten Grenztemperatur eine nennenswerte elektrische Leitfähigkeit aufweist.

Bevorzugt sind der NTC-Widerstand und die Gaserzeugungszelle Bestandteile eines geschlossenen Stromkreises oder sie bilden einen solchen. Innerhalb des Stromkreises sind der NTC-Widerstand und die Gaserzeugungszelle bevorzugt elektrisch in Reihe geschaltet. Im einfachsten Fall besteht der Stromkreislauf somit aus einer Gaserzeugungszelle, deren Pole über den NTC-Widerstand kurzgeschlossen sind.

Wird zum Beispiel ein NTC-Widerstand verwendet, der erst oberhalb von minus 20 °C elektrisch leitend ist, so wird jede Überschreitung dieser Grenztemperatur einen Stromfluss zwischen den Polen der Gaserzeugungszelle über den NTC-Wderstand auslösen, wodurch eine definierte Menge Gas freigesetzt wird. Aus der gebildeten Menge Gas kann im Nachhinein auf die Dauer und/oder das Ausmaß der Überschreitung der Grenztemperatur rückgeschlossen werden.

Wie bereits erwähnt, wird durch das erzeugte Gas der Zustand und/oder die Position eines Anzeigemittels verändert. Hierzu ist es bevorzugt, dass die Gaserzeugungszelle und das Anzeigemittel über ein Verbindungsmittel gasdicht miteinander gekoppelt sind. Als Verbindungsmittel eignet sich beispielsweise ein rohrförmiger Adapter. Es ist aber auch denkbar, dass das Verbindungsmittel als Gehäuse oder als Teil eines Gehäuses ausgebildet ist, das die Gaserzeugungszelle und das Anzeigemittel, gegebenenfalls auch den NTC-Widerstand, gasdicht umschließt.

So kann es sich bei dem Anzeigemittel beispielsweise um ein Verschiebeelement handeln, das beweglich in einem das Verschiebeelement umschließenden Gehäuse gelagert ist. Bevorzugt bildet das Verschiebeelement mit dem Gehäuse dabei einen abgeschlossenen Hohlraum aus, dessen Volumen verändert werden kann. Dieser Hohlraum kann mit der Gaserzeugungszelle gekoppelt sein, insbesondere über eines der erwähnten Verbindungsmittel. Wird von der Gaserzeugungszelle Gas erzeugt, so bildet sich in dem Hohlraum ein Druck, der wiederum eine Positionsänderung des Verschiebeelements zur Folge hat. Das Ausmaß dieser Positionsänderung ist ein Indikator für eventuelle Überschreitungen einer Grenztemperatur und deren Dauern. Als Verschiebeelement kommt beispielsweise ein Kolben, insbesondere einen zylindrischer Kolben, in Frage. Als Gehäuse für die bewegliche Lagerung solcher Verschiebeelemente sind beispielsweise hohlzylindrische Rohre oder Röhrchen geeignet.

In einer alternativen Ausführungsform kann es sich bei dem Anzeigemittel um ein expandierbares Bauteil handeln, das in Abhängigkeit der erzeugten Gasmenge sein Volumen ändert. Die erzeugte Gasmenge bewirkt somit eine Zustandsänderung des Bauteils. Das Ausmaß dieser Zustandsänderung, die Volumenzunahme, lässt wie die Positionsänderung des Schiebeelements Rückschlüsse darauf zu, ob und in welchem Umfang die zu überwachende Temperatur überschritten wurde.

Besonders bevorzugt umfasst die erfindungsgemäße Vorrichtung eine Skala, mit deren Hilfe die Positions- und/oder Zustandsänderung des Anzeigemittels einfach abgelesen werden kann. Bei der Skala kann es sich sowohl um eine numerische als auch um eine Farbskala handeln. So ist es beispielsweise möglich, als Anzeigemittel einen in einem transparenten Hohlzylinder beweglich gelagerten Kolben zu verwenden, dessen Mantel mit einer geeichten Skala versehen ist. An der Skala kann problemlos abgelesen werden, ob und wenn ja wie weit das Anzeigemittel, der Kolben, in dem Hohlzylinder verschoben wurde.

Wie bereits erwähnt, ist auch ein Verfahren zur Überwachung der Temperatur in einem Transportbehälter für temperaturempfindliche Güter Gegenstand der vorliegenden Erfindung. Bei diesem Verfahren wird die Temperatur innerhalb des Transportbehältnisses mittels eines NTC-Widerstands erfasst. Dieser ist, wie dies bereits beschrieben wurde, mit einer Gaserzeugungszelle gekoppelt, die in Abhängigkeit der durch den NTC-Widerstand fließenden Strommenge eine Gasmenge erzeugt, die den Zustand oder die Position eines mit der Gaserzeugungszelle gekoppelten Anzeigemittels verändert.

Insbesondere lässt sich das erfindungsgemäße Verfahren unter Verwendung einer erfindungsgemäßen Vorrichtung durchführen. Entsprechend gelten sämtliche Ausführungen zu bevorzugten Ausführungsformen der Merkmale der erfindungsgemäßen Vorrichtung auch für die entsprechenden Merkmale des erfindungsgemäßen Verfahrens.

Weitere Merkmale und Vorteile der beschriebenen Erfindung ergeben sich aus der nachfolgenden Beschreibung einer bevorzugten Ausführungsform der erfindungsgemäßen Vorrichtung. Die beschriebene bevorzugte Ausführungsform dient lediglich zur Erläuterung und zum besseren Verständnis der Erfindung und ist in keinster Weise einschränkend zu verstehen.

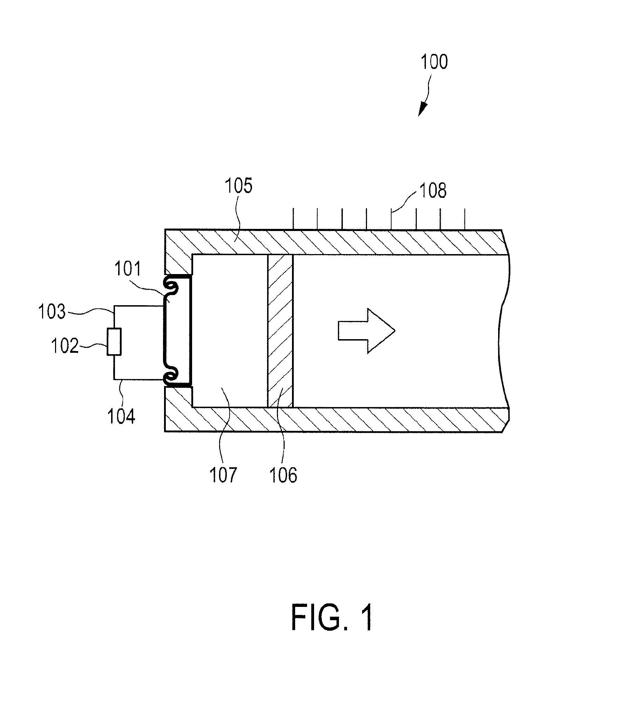

In **Fig. 1** ist eine bevorzugte Ausführungsform einer erfindungsgemäßen Vorrichtung **100** schematisch im Schnitt dargestellt. Eine Gaserzeugungszelle **101** in Knopfzellenform ist mit dem NTC-Widerstand **102** gekoppelt. Die Gaserzeugungszelle **101** weist eine Ruhespannung auf. Bei Überschreitung einer definierten Grenztemperatur kann Strom durch den NTC-Widerstand **102** fließen. Da der NTC-Widerstand **102** und die Gaserzeugungszelle **101** elektrisch in Reihe geschaltet sind, fließt durch beide Komponenten die gleiche Strommenge. Der NTC-Widerstand **102** und die Gaserzeugungszelle **101** bilden mit den sie verbindenden elektrischen Leitern **103** und **104** einen geschlossenen Stromkreis aus. Gemäß dem Faradayschen Gesetz wird bei Stromdurchfluss durch die Gaserzeugungszelle **101** eine der dem durchfließenden Strom proportionale Menge Gas erzeugt.

Die Gaserzeugungszelle **101** ist in den Boden eines rohrförmigen Hohlzylinders **105** gasdicht eingearbeitet. In dem Hohlzylinder **105** ist der als Anzeigemittel dienende Kolben **106** verschiebbar gelagert. Die Seitenwände und der Boden des Hohlzylinders **105** bildet eine adapterartige Verbindung zwischen der in den Boden eingearbeiteten Gaserzeugungszelle **101** und dem als Anzeigemittel fungierenden Kolben **106**. Der Kolben **106** bildet mit dem Mantel und dem Boden des Hohlzylinders **105** einen abgeschlossenen Hohlraum **107** aus, dessen Volumen durch Verschieben des Kolbens **106** verändert werden kann. In diesen Hohlraum **107** wird das von der Gaserzeugungszelle **101** gebildete Gas geleitet. Die Gaserzeugungszelle **101** verfügt zu diesem Zweck über geeignete, in den Hohlraum **107** mündende Auslassöffnungen. Der Kolben **106** wird von dem in den Hohlraum **107** einströmenden Gas in Pfeilrichtung verschoben und ändert somit seine Position in Abhängigkeit von der erzeugten Gasmenge.

Auf der Außenseite des Mantels des zylinderförmigen Rohres **105** ist die numerische Skala **108** angeordnet. Der Umfang der Positionsänderung des Kolbens **106** kann mit Hilfe dieser Skala **108** quantifiziert werden. Idealeruveise ist der rohrförmige Hohlzylinder **105** zu diesem Zweck transparent ausgebildet. Er kann beispielsweise aus Glas oder einem Kunststoff bestehen.

## Patentansprüche

1. Vorrichtung zur Überwachung der Temperatur von temperaturempfindlichen Gütern, umfassend eine Gaserzeugungszelle, einen NTC-Widerstand und ein Anzeigemittel, wobei die Gaserzeugungszelle, der NTC-Widerstand und das Anzeigemittel derart miteinander gekoppelt sind, dass bei Stromfluss durch den NTC-Widerstand von der Gaserzeugungszelle eine der durch den NTC-Widerstand fließenden Strommenge äquivalente Menge Gas erzeugt wird und das Anzeigemittel in Abhängigkeit der erzeugten Gasmenge seinen Zustand und/oder seine Position verändert.

2. Vorrichtung nach Anspruch 1, **dadurch gekennzeichnet, dass** der NTC-Widerstand und die Gaserzeugungszelle Bestandteile eines geschlossenen Stromkreises sind oder einen solchen bilden und innerhalb des Stromkreises elektrisch in Reihe geschaltet sind.

3. Vorrichtung nach Anspruch 1 oder Anspruch 2, **dadurch gekennzeichnet, dass** die Gaserzeugungszelle und das Anzeigemittel über ein Verbindungsmittel, z.B. einen rohrförmigen Adapter, gasdicht miteinander gekoppelt sind.

4. Vorrichtung nach einem der vorhergehenden Ansprüche, **dadurch gekennzeichnet, dass** das Anzeigemittel ein beweglich gelagertes Verschiebeelement ist.

5. Vorrichtung nach einem der Ansprüche 1 bis 3, **dadurch gekennzeichnet, dass** das Anzeigemittel ein expandierbares Bauteil ist, das in Abhängigkeit der erzeugten Gasmenge sein Volumen ändert.

6. Vorrichtung nach einem der vorhergehenden Ansprüche, **dadurch gekennzeichnet, dass** sie eine Skala umfasst, mit deren Hilfe die Positions- und/oder Zustandsänderung des Anzeigemittels abgelesen werden kann.

7. Verfahren zur Überwachung der Temperatur in einem Transportbehälter für temperaturempfindliche Güter, wobei die Temperatur innerhalb des Transportbehältnisses mittels eines NTC-Widerstands erfasst wird, der mit einer Gaserzeugungszelle gekoppelt ist, die in Abhängigkeit der durch den NTC-Widerstand fließenden Strommenge eine Gasmenge erzeugt und wobei die Gaserzeugungszelle mit einem Anzeigemittel gekoppelt ist, das in Abhängigkeit der erzeugten Gasmenge seinen Zustand und/oder seine Position verändert.

## Claims

1. A device for monitoring the temperature of temperature-sensitive goods, comprising a gas generation cell, an NTC thermistor and an indication means, wherein the gas generation cell, the NTC thermistor and the indication means are coupled to one another in such a way that, when current flows through the NTC thermistor, a quantity of gas which is equivalent to the quantity of current flowing through the NTC thermistor is generated by the gas generation cell, and the indication means changes its state and/or its position depending on the generated quantity of gas.

2. The device according to claim 1, **characterized in that** the NTC thermistor and the gas generation cell are constituent parts of a closed circuit or form a closed circuit and are connected electrically in series within the circuit.

3. The device according to claim 1 or claim 2, **characterized in that** the gas generation cell and the indication means are coupled to one another in a gas-tight manner by means of a connection means, for example a tubular adapter.

4. The device according to any one of the preceding claims, **characterized in that** the indication means is a movably mounted displacement element.

5. The device according to any one of claims 1 to 3, **characterized in that** the indication means is an expandable component which changes its volume depending on the generated quantity of gas.

6. The device according to any one of the preceding claims, **characterized in that** it comprises a scale with the aid of which the change in position and/or state of the indication means can be read off.

7. A method for monitoring the temperature in a transportation container for temperature-sensitive goods, wherein the temperature within the transportation container is detected by means of an NTC thermistor which is coupled to the gas generation cell which generates a quantity of gas depending on the quantity of current flowing through the NTC thermistor, and wherein the gas generation cell is coupled to an indication means which changes its state and/or its position depending on the generated quantity of gas.

## Revendications

1. Dispositif pour la surveillance de la température de produits sensibles à la température, comprenant une cellule de production de gaz, une résistance NTC et un moyen d'affichage, dans lequel la cellule de production de gaz, la résistance NTC et le moyen d'affichage sont couplés l'un à l'autre de telle manière qu'en cas de flux de courant à travers la résistance NTC, une quantité de gaz équivalente à la quantité de courant circulant à travers la résistance NTC soit produite par la cellule de production de gaz et que le moyen d'affichage change d'état et/ou de position en fonction de la quantité de gaz produite.

2. Dispositif selon la revendication 1, **caractérisé en ce que** la résistance NTC et la cellule de production de gaz sont des composants d'un circuit électrique fermé ou forment un tel circuit et sont connectés électriquement en série à l'intérieur du circuit électrique.

3. Dispositif selon la revendication 1 ou la revendication 2, **caractérisé en ce que** la cellule de production de gaz et le moyen d'affichage sont couplés l'un à l'autre de façon étanche au gaz à l'aide d'un moyen de raccordement, par exemple un adaptateur tubulaire.

4. Dispositif selon l'une quelconque des revendications précédentes, **caractérisé en ce que** le moyen d'affichage est un élément coulissant monté de façon mobile.

5. Dispositif selon l'une quelconque des revendications 1 à 3, **caractérisé en ce que** le moyen d'affichage est un composant expansible, qui change de volume en fonction de la quantité de gaz produite.

6. Dispositif selon l'une quelconque des revendications précédentes, **caractérisé en ce qu'**il comporte une échelle, à l'aide de laquelle le changement de position et/ou d'état du moyen d'affichage peut être lu.

7. Procédé de surveillance de la température dans un réservoir de transport pour des produits sensibles à la température, dans lequel on détecte la température à l'intérieur du réservoir de transport au moyen d'une résistance NTC, qui est couplée à une cellule de production de gaz, qui produit une quantité de gaz en fonction de la quantité de courant circulant à travers la résistance NTC et dans lequel la cellule de production de gaz est couplée à un moyen d'affichage, qui change d'état et/ou de position en fonction de la quantité de gaz produite.
